# EUROPEAN PATENT SPECIFICATION

(11) **EP 2 474 600 B1**
(45) Date of publication and mention of the grant of the patent: **15.04.2015**
(21) Application number: 11771998.9
(22) Date of filing: 19.04.2011
(51) Int. Cl.: C10L 5/48, B29B 9/02, B29B 9/08, B29B 17/00, B29B 17/04, B30B 11/22, B30B 11/20

(54) **FUEL PELLET, FUEL PELLET PRODUCTION METHOD, AND FUEL PELLET PRODUCTION DEVICE**
BRENNSTOFFTABLETTE, HERSTELLUNGSVERFAHREN FÜR BRENNSTOFFTABLETTEN UND VORRICHTUNG ZUR HERSTELLUNG VON BRENNSTOFFTABLETTEN
PASTILLE DE COMBUSTIBLE, ET PROCÉDÉ AINSI QUE DISPOSITIF DE FABRICATION ASSOCIÉS

(30) Priority: 31.03.2011 JP 2011080124; 19.04.2010 JP 2010096074
(43) Date of publication of application: 11.07.2012
(73) Proprietor: Panasonic Corporation, Kadoma-shi Osaka 571-8501 (JP); Chubu Eco Technology Co., Ltd., Yokkaichi-shi, Mie 510-0871 (JP); Mitsubishi Materials Corporation, Chiyoda-ku Tokyo 100-8117 (JP)
(72) Inventor: SAITOU, Hiroshi, Kadoma-shi Osaka 571-8501 (JP); NASU, Hitoshi, Kadoma-shi Osaka 571-8501 (JP); UJI, Yutaka, Kadoma-shi Osaka 571-8501 (JP); RIKIISHI, Kunihisa, Yokkaichi-shi Mie 510-0871 (JP); SHINOHARA, Katsunori, Yokkaichi-shi Mie 510-0871 (JP); FUJISAWA, Ryutaro, Yokkaichi-shi Mie 510-0871 (JP)
(74) Representative: Hoffmann Eitle
(86) International application number: PCT/JP2011/059602
(87) International publication number: WO 2011/132663

(56) References cited:
- DE-A1- 3 915 400
- DE-A1- 3 933 811
- JP-A- 7 232 325
- JP-A- 2000 140 794
- JP-A- 2000 140 794
- JP-A- 2001 277 242
- JP-A- 2001 277 242
- Jürgen Schmid, Markus Hornberger, Gabriela Janusz: "Untersuchung - Gefährdungspotenzial durch Cyclopentan aus der Behandlung von VOC Kühlgeräten", ABAG-itm GmbH , 31 December 2006 (2006-12-31), pages 1-29, XP002697184, Retrieved from the Internet: URL:http://www.abag-itm.de/fileadmin/Datei en/ABAG/Dokumente/VOC_Kuehlgeraet_final.pd f [retrieved on 2013-05-16]

## Description

### Technical Field

The present invention relates to a fuel pellet that is formed by compression molding of powdered polyurethane obtained by crushing urethane foam that is recovered from discarded electrical appliances, to a fuel pellet manufacturing method, and to a fuel pellet manufacturing apparatus.

### Background Art

The processing of plastic that is recovered from discarded electrical appliances has become a major problem. Among these, hard urethane foam, and in particular, chlorofluorocarbon-expanded urethane foam that is used as a heat insulating material in refrigerators or freezers is difficult to utilize as fuel due to the residual chlorine concentration being high even after being crushed into a powered state. Also, there is the problem of chlorofluorocarbon-expanded urethane foam being prone to bulkiness, and thus difficult to transport, due to its light weight and bulk specific gravity being small.

Patent Document 1 given below discloses a method of effectively utilizing plastic that is obtained from discarded electrical appliances. In this method, fuel is manufactured by crushing a thermally melting combustible substance, and then liquefying it by melting with heat, and moreover performing dechlorination by adding a dechlorinating agent, and then cooling/solidifying it.

Also, Patent Document 2 given below discloses a method of manufacturing a pelletized synthetic resin material from thermoplastic plastic crushed material that is recovered from discarded electrical appliances. In this method, the thermoplastic plastic crushed material that has been recovered and crushed material of heat insulating material from which chlorofluorocarbons have been removed are mixed, and this is pelletized.

DE 39 33 811 A1 describes an environmental friendly process for recovering fluorochlorcarbons from polyurethane foam used in freezers and refrigerators. The foam together with the inner plastic skin of the cold chamber is initially reduced to granule size and then compressed to break up the cell structure and release the gas which is then fluidized and collected. Granulating and compressing are carried out under vacuum in a closed system. Equipment comprises a pelletizer and a conveyer screw which are attached to a preforming press.

DE 39 15 400 A1 describes a process for recovery of chlorofluorocarbon gas (CFC) from plastic foam. Foam is delivers to a pelletizer where it is reduced to a powder. Air is excluded during the process. During pulverizing CFC gas is released from the foam pores and is extracted and combined with further CFC gas released when the powdered plastic is compressed, also in an airtight area. Gas from both areas is condensed and the fluid CFC is collected. Equipment consists of an airtight chamber with a pulverizer, an airtight valve and a gas extraction unit. A second airtight chamber connected to the first has a compression section and a gas extraction unit. A condenser is provided to convert extracted gas into fluid CFC
Jürgen Schmid, ABAG-itm GmbH, Pforzheim Markus Hornberger, Gabriela Janusz-Renault, FhG-IPA, Stuttgart "Untersuchung - Gefährdungspotenzial durch Cyclopentan aus der Behandlung von VOC Kühlgeräten", ABAG-itm GmbH, Pforzheim, 31st December 2006, pages 1 to 29 describes that explosive gas mixtures may develop without removal of hydrocarbons out of the cooling circuit and a corresponding addition of inert gas in the crushing site.

### Citation List

### Patent Documents

Patent Document 1: Japanese Unexamined Patent Application Publication No. H09-13062
Patent Document 2: Japanese Unexamined Patent Application Publication No. 2000-140794

### Disclosure of the Invention

### Problems to be Solved by the Invention

Even if the technique that is disclosed in Patent Document 1 described above is applied to polyurethane for heat insulation recovered from the discarded electrical appliances, since polyurethane has a thermosetting property, when it is heated it does not melt, and so it is not possible to apply the aforementioned method.

Moreover, in the case of attempting to apply the technique that is disclosed in Patent Document 2 given above to polyurethane that is recovered from discarded electrical appliances such as refrigerators, in polyurethane foam that uses chlorofluorocarbons, since the residual chlorine concentration is 1.0 wt. percent or more even if re-crushed after removing the chlorofluorocarbons, it does not become the fuel conforming residual chlorine concentration (generally 0.3 wt. % or less). Therefore, although the pelletized synthetic rein material that is manufactured does not pose problems when used as blast furnace fuel or an iron reducing agent with a high permissible concentration of residual chlorine, it cannot be used as fuel in a typical boiler, cement kiln or incinerator.

Incidentally, in recent years among the polyurethane that is recovered from discarded electrical appliances that which uses chlorofluorocarbon (R11 and chlorofluorocarbon 141b) as a foaming agent accounts for around 80%, while that which uses cyclopentane (C₅H₁₀) accounts for the remaining 20%. The polyurethane recovered annually in Japan is estimated to amount to approximately 20,000 tons (2,730,000 refrigerators were collected for processing in the 2008 fiscal year, with the amount of polyurethane extracted per refrigerator being on average 7 to 8 kg). Most of the recovered polyurethane is disposed of by incineration without being reused, and the cost of doing so is as high as 600 million to 1 billion yen per year.

There are also examples of partially using cyclopentane-expanded polyurethane for cement fuel or incinerator fuel. However, although chlorofluorocarbon-expanded polyurethane, which accounts for the great portion of polyurethane that is recovered, has a calorific value rivaling coal, since the residual chlorine amount does not meet the fuel-conforming criteria (less than 0.3 wt. percent or less), fuel utilization is not progressing.

A piece of crushed polyurethane that is separated by rough crushing a refrigerator and air separation has a bulk specific gravity of around 0.035, and so in order to convey it to a facility utilized it as fuel or performs waste treatment (incineration), the transportation cost is high. For this reason, volume reduction is being performed in the electrical appliances recycling plants. However, the mainstream way of reducing the volume is a method that re-crushes the polyurethane crushed pieces into powder (bulk specific gravity of around 0.06), and compression molds this polyurethane powder into a sponge cake (having a bulk specific gravity of about 0.16).

Although a hydraulic press is generally used for polyurethane compression molding, when doing so a high pressure of 10 to 25 MPa is needed for molding a cake with a diameter of for example 500 mm. For that reason, it is necessary to use a powerful electric motor of about 220 kW. For that reason, the electric power consumption for compression molding is large.

Since polyurethane with any shape among crushed polyurethane pieces (bulk specific gravity 0.035), polyurethane powder (bulk specific gravity 0.06), sponge cake (bulk specific gravity 0.16) is lightweight, it easily scatters. In particular, since dust is generated from polyurethane that has been reduced in volume by being turned into powder or sponge cake, it is difficult to handle. For that reason, at the receiving side of polyurethane that has been reduced in volume by being turned into powder or sponge cake, scattering prevention and dust countermeasures are required. This is also one of the reasons fuel utilization of chlorofluorocarbon-expanded polyurethane has not advanced.

As described above, polyurethane recovered from discarded electrical appliances is currently disposed of by incineration without being utilized as fuel because (1) the residual chlorine component of chlorofluorocarbon-expanded polyurethane that accounts for most of such polyurethane does not meet fuel conforming criteria, (2) the bulk specific gravity of polyurethane is small, leading to a rise in its transportation cost, and (3) even if molded into a sponge cake, there are difficulties in its handling. For these reasons, effective utilization of the polyurethane recovered from these electrical appliances is strongly desired.

The present invention was achieved in view of the above circumstances, and has as its object to provide a fuel pellet that can effectively utilize polyurethane recovered from discarded electrical appliances as fuel, a fuel pellet manufacturing method, and a fuel pellet manufacturing apparatus.

### Means for Solving the Problems

In order to resolve the aforementioned issues, the present invention provides the following means.

That is, the fuel pellet according to the present invention is a fuel pellet that is formed by compression molding powdered polyurethane that is obtained by crushing urethane foam, with the bulk specific gravity set to 0.45 to 0.55, and the residual chlorine concentration set to 0.3 wt. percent or less.

According to the fuel pellet that is constituted in the aforementioned manner, since the residual chlorine concentration is set to 0.3 wt. percent or less, it can be used as fuel for an ordinary incinerator or a boiler. If the residual chlorine concentration exceeds 0.3 wt. percent, it can only be used as a special fuel, such as a blast furnace fuel with a high permissible concentration of residual chlorine, or an iron reducing agent.

Also, since the bulk specific gravity of the fuel pellet is sufficiently consolidated to a range of 0.45 to 0.55, it is possible to reduce the cost during transport, and possible to inhibit the generation of powder dust. If the bulk specific gravity of the fuel pellet is less than 0.45, the transportation cost increases, and moreover the compression is insufficient, and so generation of powder dust cannot be inhibited. Also, when the bulk specific gravity of the fuel pellet exceeds 0.55, the cost for compression increases and is no longer realistic.

Note that the fuel pellet may be formed in a cylindrical shape, and the ratio L/D of the length L and the diameter D may be 4 to 15.

In this case, since it is formed in a cylindrical shape, handling is easy, and the drying and cooling effect are also excellent. If the ratio L/D of the length L and the diameter D is less than 4, high consolidation cannot be achieved. Also, when the ratio L/D of the length L and the diameter D exceeds 15, the degassing efficiency drops during molding, and it is difficult to set the residual chlorine concentration to 0.3 wt. percent or less. As a result, since additional equipment becomes necessary, a cost increase becomes a concern.

The fuel pellet manufacturing method according to the present invention is a manufacturing method for manufacturing a fuel pellet, provided with a crushing step that crushes urethane foam recovered from discarded electrical appliances into powdered polyurethane of 10 mm or less, and a compression step that compression molds fuel pellets by interposing the powdered polyurethane between a ring-shaped die and a press roll that is arranged on the inner side of the die, and pushing it out from molding holes formed in the die.

Since the fuel pellet manufacturing method that is constituted as described above directly compression molds fuel pellets between the press roll and the die, it is possible to compress pellet-shaped polyurethane with good efficiency compared to the case of forming a sponge cake shape by compression molding polyurethane powder using a pressing machine. As a result, it is possible to easily set the bulk specific gravity of the fuel pellet to 0.45 to 0.55. Also, since it is compressed while being pressed out from the molding holes, its degassing efficiency is also excellent, and so the residual chlorine concentration can be set to 0.3 wt. percent or less without using forced heating or a dechlorination agent even chlorofluorocarbon-expanded polyurethane.

The temperature of the powdered polyurethane during the compression step may be in the range of 140°C to 160°C.

In this case, since it is possible to compression mold the fuel pellet under comparatively low temperature conditions (flash point of polyurethane is approximately 310°C, and the ignition point is approximately 410°C), the polyurethane does not catch fire during the compression processing. As a result, safety is increased.

The compression step may be performed in a negative pressure atmosphere in which the pressure is 147 Pa to 245 Pa lower than the atmospheric pressure.

In this case, since the compression processing is performed in a negative pressure condition, it is possible to quickly remove gasses (chlorofluorocarbons and water vapor) that separate from the polyurethane during compression, and possible to further increase the degassing efficiency. Note that when the negative pressure is lower than 147 Pa, the degassing efficiency drops, and the gasses and air are hindered from escaping from the polyurethane powder. Also, when the negative pressure is higher than 245 Pa, the amount of polyurethane powder that flows to the side of the negative pressure source such as a blower or the like increases, giving rise to the risk of a drop in the yield of the fuel pellet formation.

A cooling step that cools the fuel pellets in a heated state following compression molding may be provided after the compression step.

In this case, it is possible to suitably cool fuel pellets that have been compression molded, and possible to preclude the danger such as heat generation during subsequent storage of the fuel pellets.

The fuel pellet manufacturing apparatus according to the present invention is provided with a pelletizing unit that compression molds fuel pellets by interposing powdered polyurethane between a ring-shaped die and a press roll that is arranged on the inner side of the die, and pushing it out from molding holes formed in the die; a polyurethane supply unit that supplies powdered polyurethane to the pelletizing unit; a cooling unit that cools the fuel pellets that have been compression molded in the pelletizing unit; a conveying unit that conveys the fuel pellets that have been compression molded in the pelletizing unit to the cooling unit; and a negative pressure forming unit that maintains a space that is formed surrounding the pelletizing unit and the conveying unit at a predetermined negative atmosphere.

According to the fuel pellet manufacturing apparatus constituted in the aforementioned manner, it is possible to favorably carry out the fuel pellet manufacturing method of the present invention described above. As a result, it is possible to manufacture the fuel pellet according to the present invention.

Also, an inert gas introducing unit that introduces inert gas to the pelletizing portion that compression molds the fuel pellet, and a first blocking-inhibiting unit that inhibits the spread of flames generated in the pelletizing portion to an outside of the pelletizing portion and a second inhibiting unit that inhibits the spread of the effects of an explosion that occurs in the pelletizing portion to the outside of the pelletizing portion may be attached to the pelletizing unit.

In this case, since accident prevention measures are taken in the pelletizing portion, it is suited to the processing of cyclopentane-expanded polyurethane.

### Advantageous Effects of the Invention

The fuel pellet of the present invention can be used as fuel for an ordinary incinerator or a boiler. Also, since the bulk specific gravity is set to 0.45 to 0.55, it is sufficiently consolidated, and so it is possible to reduce the cost during transport, and possible to inhibit the generation of powder dust, and so the handling simultaneously improves.

Also, according to the fuel pellet manufacturing method of the present invention, it is possible to compress pellet shaped polyurethane with good efficiency compared to the case of forming a sponge cake shape by compression molding polyurethane powder using a pressing machine, and it is possible to easily set the bulk specific gravity of the fuel pellet to 0.45 to 0.55. Also, its degassing efficiency is also excellent, and so the residual chlorine concentration can be set to 0.3 wt. percent or less without using forced heating or a dechlorination agent, not only for cyclopentane-expanded polyurethane but even chlorofluorocarbon-expanded polyurethane.

Also, according to the fuel pellet manufacturing apparatus of the present invention, it is possible to suitably carry out the fuel pellet manufacturing method of the present invention, and so possible to manufacture the fuel pellet according to the present invention.

### Brief Description of the Drawings

FIG. 1 is a perspective view that shows an embodiment of the fuel pellet according to the present invention.
FIG. 2 is a flowchart that shows the first embodiment of the fuel pellet manufacturing apparatus of the present invention.
FIG. 3 is a perspective view that shows the roller-type pellet mill that is used in the fuel pellet manufacturing apparatus of the first embodiment.
FIG. 4 is a flowchart when performing the fuel pellet manufacturing method using the fuel pellet manufacturing apparatus of the first embodiment.
FIG. 5 is a flowchart that shows a reference example of the fuel pellet manufacturing apparatus.
FIG. 6 is an enlarged view that shows in detail the vicinity of the polyurethane introduction portion of the roller-type pellet mill in the reference example of the fuel pellet manufacturing apparatus.
FIG. 7 is a flowchart when performing the fuel pellet manufacturing method using the fuel pellet manufacturing apparatus of the reference example.

### Mode for Carrying out the Invention

### (First Embodiment)

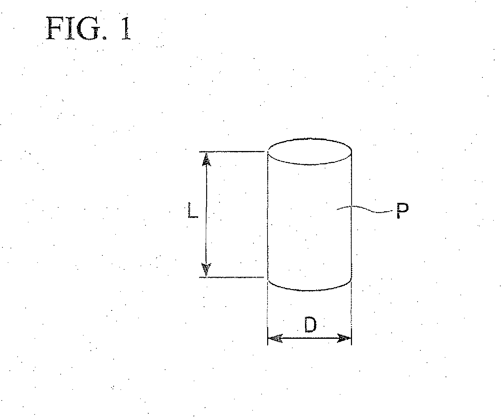

FIG. 1 is a perspective view that shows an embodiment of the fuel pellet according to the present invention. The fuel pellet P according to the present invention is formed by compression molding powdered polyurethane that is obtained by crushing hard urethane foam that has been recovered from discarded electrical appliances. Also, the bulk specific gravity of the fuel pellet P is set to 0.45 to 0.55, and the residual chlorine concentration is set to 0.3 wt. percent or less. Also, the fuel pellet P is formed in a cylindrical shape with a length (L) to diameter (D) ratio (L/D) of 4 to 15, and has a lower heating value of 6,700 kcal/kg to 7,200 kcal/kg.

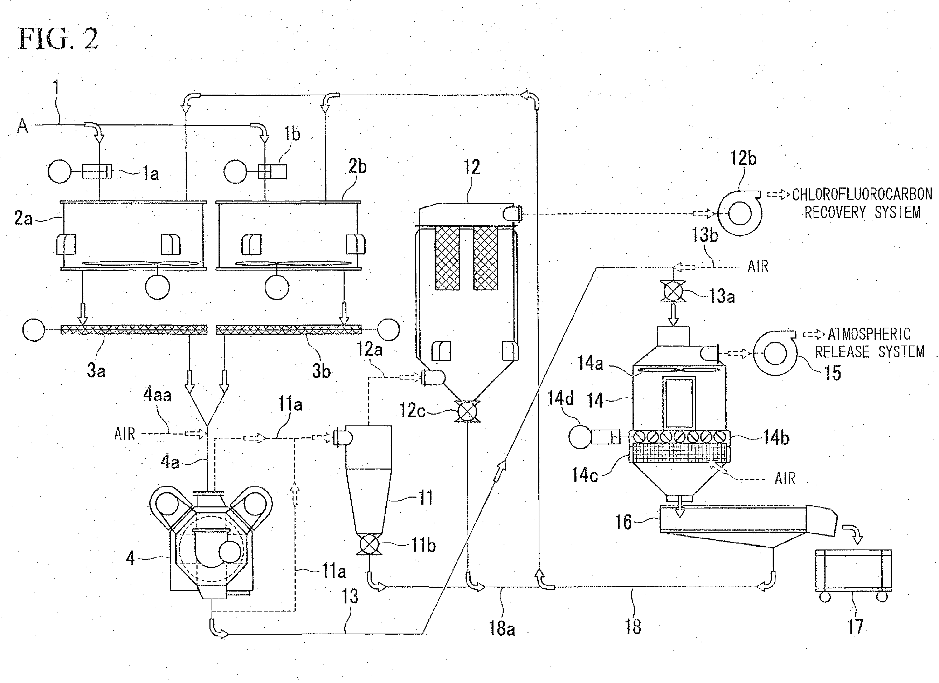

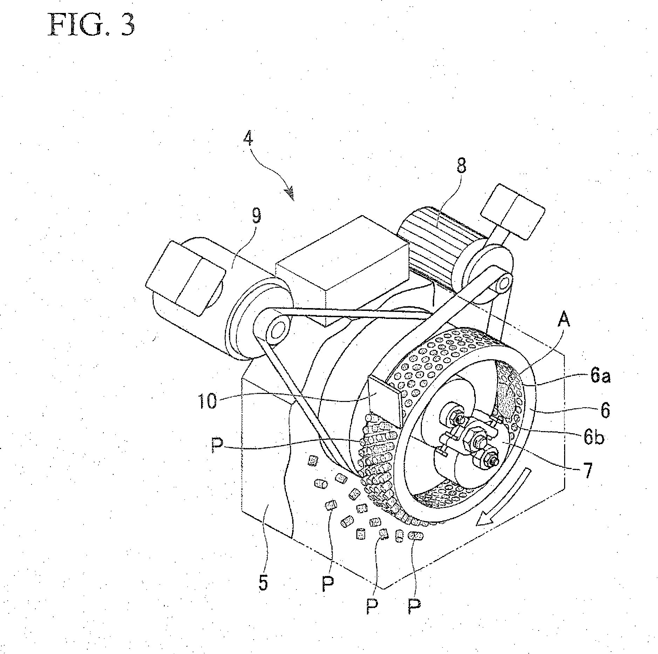

The fuel pellet P is formed using a fuel pellet manufacturing apparatus that is the first embodiment of the present invention shown in FIG. 2 and FIG. 3. FIG. 2 is a flowchart that shows the first embodiment of the fuel pellet manufacturing apparatus of the present invention, and FIG. 3 is a perspective view that shows the roller-type pellet mill that is used in the fuel pellet manufacturing apparatus of the first embodiment shown in FIG. 2 (for example, a model manufactured by MIIKE WORKS Co.,Ltd.). Note that the fuel pellet manufacturing apparatus of the first embodiment shown in FIG. 2 and FIG. 3 is an apparatus that manufactures fuel pellets mainly from chlorofluorocarbon-expanded polyurethane.

As shown in FIG. 2, the distal end of a conveyer 1, which is connected to a crushing machine of the prior stage not illustrated, is divided into two branches, and storage tanks 2a, 2b are respectively connected via dampers 1a, 1 b to those distal ends. The storage tanks 2a, 2b store powdered polyurethane (hereinafter referred to as polyurethane powder A) that is obtained by crushing hard urethane foam recovered from discarded electrical appliances and which is conveyed by the conveyer 1. Flow inlets of screw feeders 3a, 3b are connected to the flow outlets of these storage tanks 2a, 2b, and the flow outlets of these screw feeders 3a, 3b are connected to a roller-type pellet mill 4 via a polyurethane introducing path 4a.

Note that the conveyer 1, the dampers 1 a, 1 b, the storage tanks 2a, 2b, the screw feeders 3a, 3b, and the polyurethane introducing path 4a constitute a polyurethane supply unit that supplies the polyurethane powder A to the roller-type pellet mill 4.

As shown in FIG. 3, the roller-type pellet mill 4 is provided with a ring-shaped die 6 in a casing 5, and a press roll 7 that is eccentrically arranged with respect to the ring-shaped die 6 on the inner side thereof. In the ring-shaped die 6, a plurality of molding holes 6b are formed along the radiation direction in a ring-shaped main body wall 6a. The length L and the hole diameter D of the molding holes 6b are set to a ratio L/D of 4 to 15. The ring-shaped die 6 is rotated by motors 8 and 9. The press roll 7 is planetary. A cutter 10 is arranged on the outer periphery of the ring-shaped die 6.

The polyurethane powder A that is supplied to the roller-type pellet mill 4 is compressed by the ring-shaped die 6 and the press roll 7, pushed out from the molding holes 6b of the ring-shaped die in a cylindrical shape, and cut off to a predetermined length by the cutter 10, whereby the fuel pellet P is formed. That is, the roller-type pellet mill 4 constitutes a pelletizing unit that compression molds the fuel pellet by interposing the powdered polyurethane between the ring-shaped die 6 and the press roll 7 that is arranged on the inner side of the die, and pushing it out from the molding holes 6b of the die.

As shown in FIG. 2, a cyclone 11 is connected via a degassing passage 11 a to the roller-type pellet mill 4, and a bag filter 12 is connected via a gas passage 12a to the distal end of the cyclone 11. Also, a forced exhaust blower 12b is connected downstream of the bag filter 12.

When the blower 12b is driven, the inside of the roller-type pellet mill 4 becomes a more negative pressure than the atmosphere, and chlorofluorocarbons and water vapor that have been separated from the polyurethane powder A are discharged from the roller-type pellet mill 4 through the cyclone 11 and the bag filter 12. Ready-made activated carbon adsorption equipment is connected at the spout of the blower 12b, Also, an air introducing path 4aa is connected to the polyurethane introducing path 4a, and so when the roller-type pellet mill 4 has a more negative pressure than the atmosphere, outside air is introduced from this air introducing path 4aa.

The base end of a chain conveyor 13 that is a hermetic type and made of steel is connected to the flow outlet of the roller-type pellet mill 4, and the distal end of the hermetic type chain conveyor 13 is connected to an air-cooling type cooling tower 14 through a rotary valve 13a. An air introducing path 13b is provided at the downstream of the chain conveyer 13, and when the pressure in the roller-type pellet mill 4 and the hermetic type chain conveyer 13 that is continuous with this roller-type pellet mill 4 becomes less than atmospheric pressure, outside air for cooling is introduced from this air introducing path 13b.

The air-cooling type cooling tower 14 is a pyramidal vertical type cooling tower. A tilted gallery 14a is provided at the top inside of the air-cooling type cooling tower 14, and fuel pellets P that are supplied from the rotary valve 13a pass through this tilted gallery 14a, whereby they are dropped in a distributed manner, and accumulated with a uniform thickness on the bottom plate 14b located below. The bottom plate 14b is equipped with a belt-like gas distribution plate that has an air blow-out port. Also, at the bottom portion of the straight drum portion of the air-cooling type cooling tower 14, an air intake port 14c is provided under the bottom plate 14b. When the inside of the air-cooling type cooling tower 14 is maintained at a negative pressure by an exhaust blower 15 that is continuous with the inner space of the air-cooling type cooling tower 14, outside air is introduced from the air intake port 14c. The outside air that has been introduced flows from lower to higher in the space within the air-cooling type cooling tower 14, and thereby the fuel pellets P that are accumulated on the bottom plate 14b are cooled.

The bottom plate 14b is rotated by a rotating unit 14d at every set time or intermittently in accordance with the temperature of the fuel pellets P. Thereby, the fuel pellets P which have been accumulated to a predetermined amount are conveyed to a vibrating feeder 16 connected downstream of the air-cooling type cooling tower 14.

The vibrating feeder 16 is equipped with a screen of 32 to 36 meshes. Powder or waste pellets that accompany the fuel pellets P conveyed by the vibrating feeder 16 are sifted out by this screen. The fuel pellets P from which dust and the like has been eliminated are supplied to a shipping container 17 or a flexible container bag.

An apron conveyer 18 is connected to the vibrating feeder 16, and the powder and waste pellets that are recovered by this apron conveyer 18 are carried to the storage tanks 2a, 2b to be reused as pellet raw material. Moreover, urethane dust in the exhaust gas (chlorofluorocarbons and water vapor) that has been caught by the cyclone 11 and the bag filter 12 is carried out from accessory rotary valves 11 b, 12c, respectively, and merged with the apron conveyor 18 via the apron conveyor 18a, and from there sent to the storage tanks 2a, 2b.

Here, the air-cooling type cooling tower 14 constitutes a cooling unit that cools the fuel pellets A that have been compression-molded by the roller-type pellet mill 4 that is the pelletizing unit. Also, the hermetic type chain conveyor 13 constitutes a conveying unit that conveys the fuel pellets A that have been compression molded by the roller-type pellet mill 4 that is the pelletizing unit to the air-cooling type cooling tower 14 that is the cooling unit. In addition, the hermetic type chain conveyor 13 also serves as a cooling unit that performs preliminary cooling using air while the fuel pellets A that have been compression molded are being conveyed to the air-cooling type cooling tower 14. Also, the blower 12b and the exhaust blower 15 constitute a negative pressure forming unit that maintains the roller-type pellet mill 4 that is the pelletizing unit and the hermetic type chain conveyor 13 that is the conveying unit in a negative pressure atmosphere.

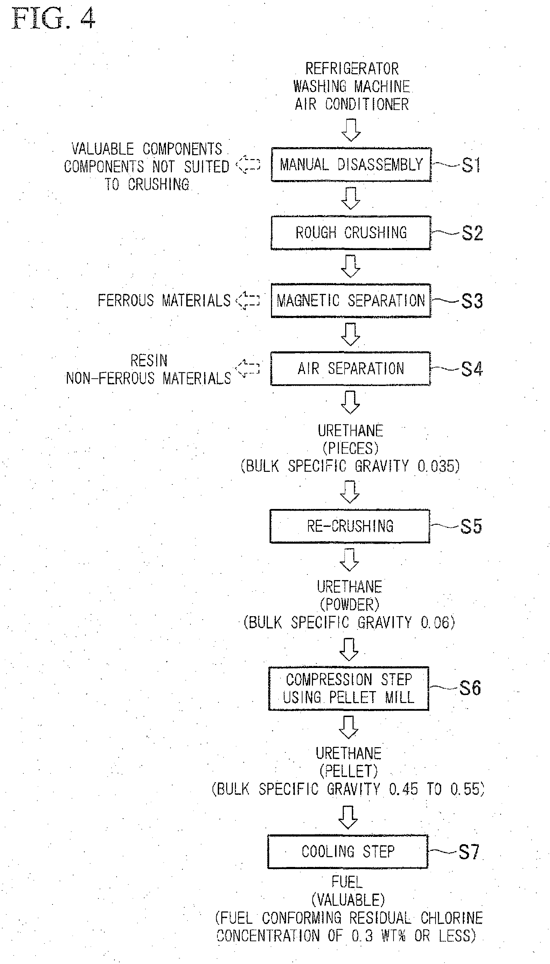

FIG. 4 is a flowchart for when manufacturing fuel pellets using the fuel pellet manufacturing apparatus of the first embodiment. The fuel pellet manufacturing method of the present invention shall be described within the scope of this drawing.

First, a discarded electrical appliance such as a refrigerator, a freezer, washing machine, air conditioner or the like is manually disassembled (Step S1), and the valuable components are recovered from the manufactured article, and parts that are not suited to crushing are separated out.

Next, the remainder of the dismantled manufactured article is subjected to rough crushing with a crusher (Step S2). Then, ferrous materials are separated from the crushed pieces by magnetic separation (Step S3). Then, crushed pieces consisting of resin and non-iron and crushed pieces of polyurethane are separated by air separation (Step S4). At this time, the bulk specific gravity of the polyurethane crushed pieces is around 0.035.

Next, the polyurethane crushed pieces are more finely crushed by a crushing machine (Step S5). Thereby, polyurethane powder with a diameter of 10 mm or less (a suitable value being 5 mm or less) is obtained. The polyurethane powder is a mixture of grained shapes and other shapes, and so a diameter of 10 mm or less means that the maximum length of the polyurethane crushed pieces is 10 mm or less. Although making the polyurethane powder 10 mm or less was previously done for forming sponge cake by press molding, this is utilized as is in order to form fuel pellets P without any difficulty by the roller-type pellet mill 4. Note that the bulk specific gravity of the polyurethane power at this time is approximately 0.06.

The aforementioned are the steps that have conventionally been performed in electrical appliance recycling plants.

Next, the fuel pellet manufacturing apparatus of the first embodiment described above is used to perform compression molding of polyurethane powder, and in addition to compression molding the fuel pellet P according to the present invention (Step S6), the fuel pellet P that is formed is cooled to a predetermined temperature (Step S7).

Specifically, the polyurethane powder A that is obtained in the aforementioned Step S5 is conveyed by the conveyer 1, and stored in the storage tanks 2a, 2b via the dampers 1a, 1b.

A fixed quantity of the stored polyurethane powder A is supplied from the storage tanks 2a, 2b to the roller-type pellet mill 4 by the screw feeders 3a, 3b. Note that the screw feeders 3a, 3b ordinarily are alternately driven. The supplied amount of the polyurethane powder A at this time can be adjusted within a range of 200 kg/h to 500 kg/h, with a range of 300 kg/h to 400 kg/h being preferred.

The dispensed specified amount of polyurethane powder A is loaded into the roller-type pellet mill 4 via the polyurethane introducing path 4a. At this time, there is a risk of the gravitational drop being impeded by the upward flow of chlorofluorocarbons and water vapor that have been separated (described below). In this embodiment, air is introduced from the air introducing path 4aa in tandem with maintaining the roller-type pellet mill 4 at a negative pressure with the blower 12b, and due to the flow of this air that is introduced, polyurethane powder A quickly flows from the side of the screw feeders 3a, 3b to the roller-type pellet mill 4 side.

The polyurethane powder A that has flowed into the roller-type pellet mill 4 is compressed by the ring-shaped die 6 and the press roll 7, pushed out from the molding holes 6b of the ring-shaped die while molded into a cylindrical shape, and cut off to a predetermined length by the cutter 10, whereby the fuel pellet P is formed.

In this way, a method that directly performs compression molding of fuel pellets from polyurethane powder using the roller-type pellet mill 4 has good compression efficiency, and compared to the case of producing a sponge cake with a conventional hydraulic press, can perform sufficient compression molding even when using a motor with half the output (110 kW). Therefore, the electricity power consumption is also small.

When the polyurethane powder A is subjected to compression molding by the roller-type pellet mill 4, chlorofluorocarbon (R11 and chlorofluorocarbon 141 b) that is used for expansion of the polyurethane, and that exists between the polyurethane molecules or dissolves in the molecules, and moisture that is contained in the polyurethane powder A are heated by the frictional heat and compression heat which are generated at the time of compression, and separate from the urethane molecules.

The pelletization temperature due to this frictional heat or compression heat is in the range of 140°C to 160°C. Note that when the pelletization temperature is lower than 140°C, since expansion of chlorofluorocarbons and air in the polyurethane powder A is inhibited, separation of the chlorofluorocarbons and the like from the polyurethane powder A is inhibited. Also, when the pelletization temperature is higher than 160°C, the amount of gas (chlorofluorocarbons, water vapor) that separates increases, with the diffusion being insufficient, leading to many burst, defective pellets being formed. Although the pelletization temperature changes with the amount of the polyurethane powder A that is supplied, it is preferred to adjust the supply amount of the polyurethane powder A to the roller-type pellet mill 4 so that the temperature is in the range of 145°C to 155°C.

The chlorofluorocarbons and water vapor that have separated from the polyurethane powder A are forcibly exhausted by the blower 12b through the degassing passage 11a, the cyclone 11, and the bag filter 12. The exhaust flow rate at this time is set to a range of 15 m³/min to 30 m³/min. When the exhaust flow rate is less than 15 m³/min, the gases to be separated (chlorofluorocarbons and water vapor) cannot be effectively discharged. When the exhaust flow rate exceeds 30 m³/min, the amount of the polyurethane powder A that accompanies the gas being exhausted (chlorofluorocarbons and water vapor) increases remarkably. A more preferable exhaust flow rate is 20 m³/min to 26 m³/min.

At this time, the pressure in the interior of the roller-type pellet mill 4 is maintained in a negative pressure atmosphere that is 147 Pa to 245 Pa (15 mmH2O to 25 mmH2O) lower than the atmospheric pressure. The maintenance of the pressure in the interior of the roller-type pellet mill 4 in the negative pressure atmosphere is performed due to the same reason the exhaust flow rate is determined as mentioned above.

In addition, gas containing the chlorofluorocarbons exhausted by the exhaust gas blower 12b is introduced to ready-made activated carbon adsorption equipment, and chlorofluorocarbon collection is performed.

In this way, a fuel pellet P is manufactured with a cylindrical shape from recovered polyurethane powder A having a length L to diameter D ratio (UD)of 4 to 15, a bulk specific gravity of 0.45 to 0.55, a lower heating value of 6,700 kcal/kg to 7,200 kcal/kg, and a residual chlorine concentration of 0.25 to 0.30 wt. percent. In order to make the fuel pellet P conform to the aforementioned conditions, it is essential to suitably control the raw material supply Rate, the pelletization temperature, exhaust air flow rate, and the internal pressure. The suitable values in this embodiment are shown in the following Table 1.

**(Table 1)**

| Supply Rate (kg/h) | Pelletization Temperature (°C) | Exhaust Air Flow Rate (m³/min) | Internal Negative Pressure (Pa) |
|---|---|---|---|
| 350 to 370 | 145 to 155 | 23 to 26 | 177 to 216 |

After the formed fuel pellets P are regulated to a length of 10 to 30 mm by the cutter 10 that is built into the roller-type pellet mill 4, they are discharged from a discharge port and conveyed via the hermetic type chain conveyor 13 to the air-cooling type cooling tower 14.

The pellet temperature immediately after being discharged is in the rage of 142°C to 155°C. Conveying them with the steel chain conveyor 13 having excellent flame retardance and heat dissipation imparts a cooling effect, and simultaneously, outside air for cooling is taken in from the air introducing path 13b that is at the downstream of the chain conveyor 13, thereby subjecting the fuel pellets P to preliminary cooling with this outside air. As a result, the temperature of the fuel pellets P after the preliminary cooling is cooled to around a range of 70°C to 90°C.

The fuel pellets P conveyed by the chain conveyor 13 to the air-cooling type cooling tower 14 are dropped in a distributed manner from the tilted gallery 14a of the air-cooling type cooling tower 14 via the rotary valve 13a, and accumulated with a uniform thickness on the bottom plate 14b. In this embodiment, the accumulated thickness is set to a range of 100 mm to 150 mm in consideration of the cooling effect.

The fuel pellets P that have been accumulated on the bottom plate 14b are cooled by outside air being introduced from the air intake port 14c until they have a temperature in the range of 25°C to 45°C, in addition to the exhaust gas blower 15 being driven.

The temperature transition of the fuel pellets P is shown in the following Table 2.

**(Table 2)**

| Temperature After Pelletization (°C) | Temperature After Cooling (°C) | Temperature After Air Cooling (°C) |
|---|---|---|
| 142 to 155 | 70 to 90 | 25 to 45 |

The bottom plate 14b is rotated by the rotating unit 14d at every set time or intermittently in accordance with the temperature of the fuel pellets, and the fuel pellets P which have been accumulated to a predetermined amount are discharged to the vibrating feeder 16.

The fuel pellets P that has been discharged are supplied to the shipping container 17 or to the flexible container bag.

When the fuel pellets P pass through the screen of the vibrating feeder 16, the powder and waste pellets that accompany the fuel pellets P are sifted out by this screen. The polyurethane powder and waste pellets that have been eliminated by the screen are recovered by the apron conveyer 18, and carried to the storage tanks 2a, 2b to be used again as pellet raw material.

Since the residual chlorine concentration is set to 0.3 wt. percent or less, the fuel pellet P of the present invention as described above can be utilized as fuel for an ordinary incinerator or boiler. By comparison, when the residual chlorine concentration is a value that exceeds 0.3 wt. percent, it can only be used as a special fuel, such as a blast furnace fuel or an iron reducing agent with a high permissible concentration of residual chlorine. Also, since the bulk specific gravity is set to a range of 0.45 to 0.55, it is sufficiently consolidated, and so it is possible to reduce the transportation cost and possible to inhibit the generation of powder dust.

In addition, since the fuel pellet P is formed in a cylindrical shape with the ratio UD of the length L and the diameter D being 4 to 15, handling is easy, and the drying and cooling effect are also excellent. Also, when the ratio L/D of the length L and the diameter D is less than 4, high consolidation cannot be achieved, and when the ratio L/D of the length L and the diameter D exceeds 15, degassing cannot be favorably performed, and so it is difficult to set the residual chlorine concentration to 0.3 wt. percent or less.

### (Second Embodiment)

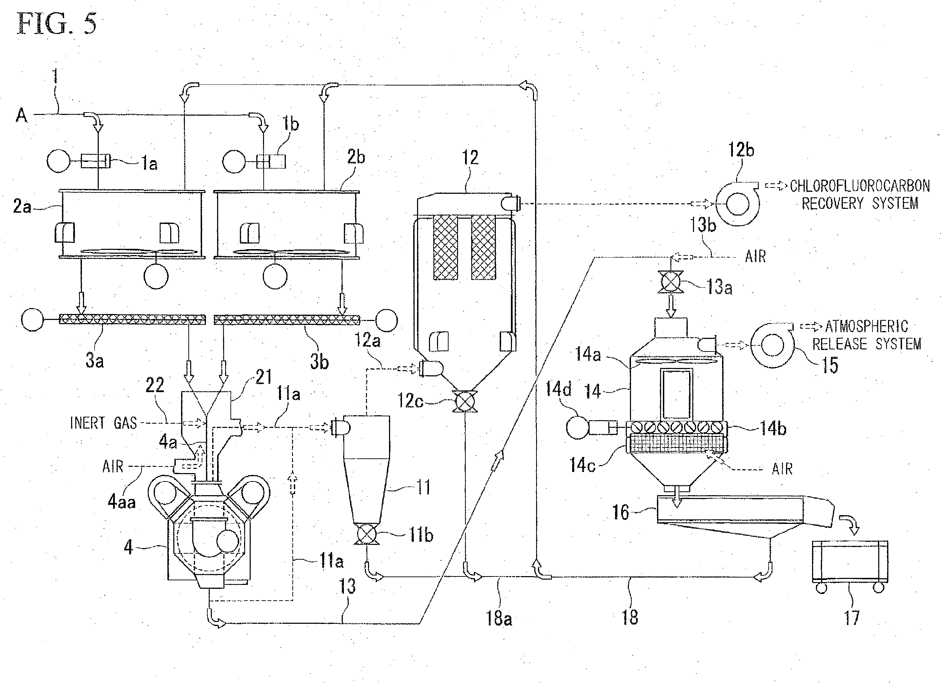

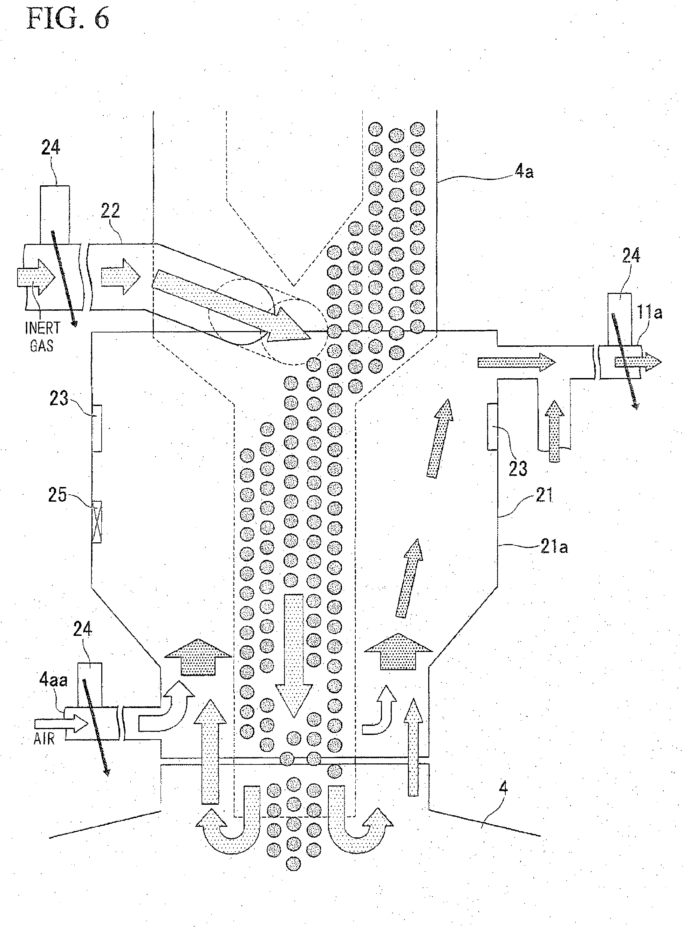

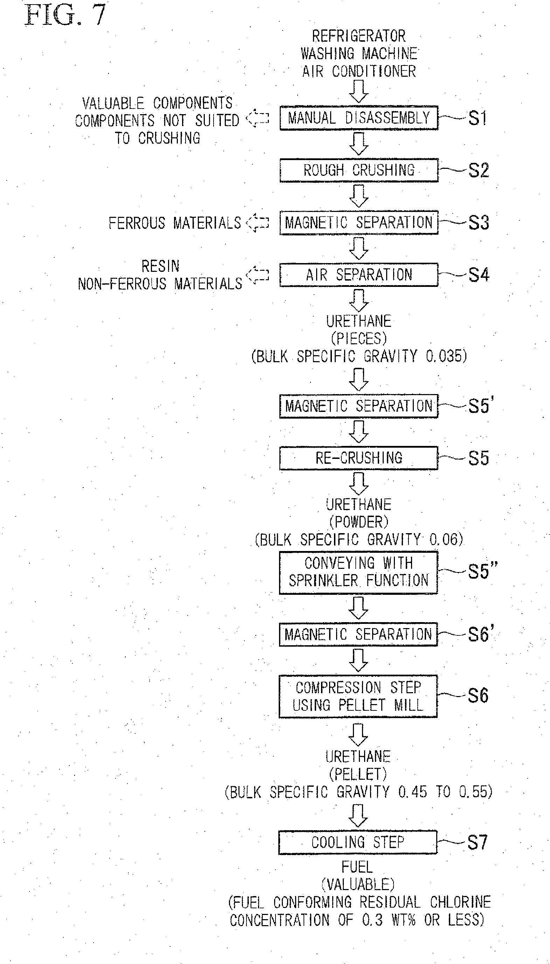

FIG. 5 is a flowchart that shows the second embodiment of the fuel pellet manufacturing apparatus of the present invention. FIG. 6 is an enlarged view that shows in detail the vicinity of the polyurethane introduction portion of the roller-type pellet mill in the second embodiment of the fuel pellet manufacturing apparatus of the present invention. FIG. 7 is a flowchart when performing the fuel pellet manufacturing method using the fuel pellet manufacturing apparatus of the second embodiment.

Note that, for the convenience of explanation, in the fuel pellet manufacturing apparatus and manufacturing method of the second embodiment, those constituent elements that are the same in the fuel pellet manufacturing apparatus and manufacturing method of the first embodiment shown in FIG. 2 and FIG 4 are denoted by the same reference numerals, and explanations thereof are omitted.

The fuel pellet manufacturing apparatus and manufacturing method of the second embodiment are the preferred fuel pellet manufacturing apparatus and manufacturing method to be used for manufacturing fuel pellets mainly from cyclopentane-expanded polyurethane.

Since the cyclopentane itself of cyclopentane-expanded polyurethane is flammable, accident prevention measures are necessary when manufacturing fuel pellets.

As shown in FIG. 5 and FIG. 6, the fuel pellet manufacturing apparatus of the reference example is provided with a hopper 21 so as to surround the connection portion of the polyurethane introducing path 4a to the roller-type pellet mill 4, with an inert gas introducing path 22 for introducing inert gas to this hopper 21 being arranged through a side wall 21 a of the hopper 21 so as to reach the polyurethane introducing path 4a. From this inert gas introducing path 22, inert gas, such as nitrogen gas or argon gas, is introduced. As for the introduction of inert gas, when for example the inside of the roller-type pellet mill 4 becomes a negative pressure due to the blower 12b being driven, it is introduced into the roller-type pellet mill 4 utilizing that negative pressure. Moreover, when still more inert gas is required, a blower not illustrated may be installed at the base end side of the inert gas introducing path 22, and inert gas may be forcibly introduced into the roller-type pellet mill 4 utilizing the pressure of this blower.

In this way, inert gas is introduced into the roller-type pellet mill 4 in order to prevent the ignition of cyclopentane gas in the roller-type pellet mill 4 and in order to simplify flame extinction in the event of a fire by the effect of diluting the concentration of the cyclopentane gas to a predetermined value or less, and the effect of lowering the oxygen concentration in the roller-type pellet mill 4. That is, the inert gas introducing path 22 constitutes an inert gas introducing unit that introduces inert gas into the pelletization portion including the hopper 21 and the roller-type pellet mill 4.

Also, the air introducing path 4aa is connected to the hopper 21 so as to open to the side wall 21 a of the hopper. When the blower 12b is driven, air is introduced into the hopper 21 from the air introducing path 4aa by the suction force of the blower 12b. The air that is introduced merges with a portion of the inert gas that is introduced into the roller-type pellet mill 4, and is led to the cyclone 11 via the degassing passage 11a that is connected to the hopper 21. In this way, the introduction of air to the hopper 21 via the air introducing path 4aa serves to obtain the air flow required for carrying the urethane dust and the like generated in the roller-type pellet mill 4 to the cyclone or bag filter 12.

Also, a pressure sensor 23 is provided on the interior of the side wall 21 a of the hopper 21. This pressure sensor 23 controls the operation of a knife gate valve 24, and is connected to a control portion (not illustrated) that performs control for introducing a powder fire extinguishing agent into the roller-type pellet mill 4. The knife gate valve 24 can be substituted by installing a mechanism that ejects the powder fire extinguishing agent at the same location. The powder fire extinguishing agent that is introduced into the hopper 21 has an effect of suppressing flames by the cyclopentane, and blocking of the piping to the hopper 21 has a flame blocking effect. In this case, blocking of flames in the piping that is connected to the degassing passage 11 a is important, and there is the effect of preventing the occurrence of secondary damage in the dust collection system by blocking the flames here. The degassing passage 11a from the pellet outlet shown in FIG. 5 also converges with the degassing passage of this dust collection system, and the flame blocking mechanism must be arranged subsequent to the converging and prior to the cyclone 11. Regarding the air or nitrogen gas introduction piping, since no substance is basically present that could ignite, it is possible to achieve compliance with a flame extinction vent that is a measure only for flame extinction. The installation location of a knife gate valve 24 or the powder fire extinguishing agent that are meant for flame blocking is a location that is separated from the hopper 21 by a travel distance (that is, a safety distance of the installation in the case of the maximum KG value assumed to be 260 in the state of a hybrid of cyclopentane and urethane powder dust being 2.5 to 7.5 m in the case of the pipe diameter being 300 mm) that is calculated from the time from after detecting pressure by the pressure sensor 23 to the operation of the devices, and the speed of the flames, and is arranged in the inert gas introducing path 22, the air introducing path 4aa, and the degassing passage 11 a, which are the three pipes connected to the hopper. Also, the powder fire extinguishing agent, which possess a flame inhibiting effect, is also arranged so as to be released to the hopper 21.

Then, when the pressure sensor 23 detects the pressure in the hopper 21 or in the roller-type pellet mill 4 that is connected to the hopper 21 has increased abnormally, the knife gate valve 24 is blocked, or the powder fire extinguishing agent is emitted at that location based on an output signal from the control portion. Thereby, the flame that has occurred in the hopper 21 is prevented from propagating through the inert gas introducing path 22, the air introducing path 4aa, and the degassing passage 11 a to the connection ends of these passages on the opposite side of the hopper. Also, based on the output signal from the control portion, discharging the powder fire extinguishing agent to the hopper 21 works the effect of inhibiting the flame, which is the cause of the abnormal pressure.

That is, the pressure sensor 23, the knife gate valve 24, the powder fire extinguishing agent, and the control portion constitute a first blocking-inhibiting unit that, in the event of a flame occurring in the hopper 21 or the roller-type pellet mill 4 (that is, in the pelletization portion that includes the hopper 21 and the roller-type pellet mill 4), inhibits the effect thereof from spreading to other constituent portions (outside of the pelletization portion) of the fuel pellet manufacturing apparatus.

Also, an explosion vent 25 is provided on the side wall of the hopper 21. This explosion vent 25 is normally closed, but in the case of the pressure in the space that this explosion vent 25 is installed, for example, in the hopper 21, becoming abnormally high, it is immediately opened to allow the pressure in the same space to escape to the outside. Also, where necessary, a flame damper may be added to accompany the explosion vent 25 so as to prevent flames from escaping from the explosion vent that has been opened to the outside.

That is, the explosion vent 25 or the flame damper that accompanies the explosion vent 25 constitutes a second inhibiting unit that, in the event of an explosion having occurred in the hopper 21 or in the roller-type pellet mill 4 (the pelletization portion), inhibits the effect thereof from spreading to other constituent portions (outside of the pelletization portion) of the fuel pellet manufacturing apparatus.

Note that according to the fuel pellet manufacturing apparatus of the reference example, as an accident prevention measure when manufacturing fuel pellets by processing cyclopentane-expanded polyurethane, the inert gas introducing unit, the first blocking-inhibiting unit and the second inhibiting unit are provided, but it is not always necessary to provide all of these units, and instead it may be provided with any one among them, or any two among them.

As shown in FIG. 7, according to the fuel pellet manufacturing method of the reference example, magnetic separation that separates and removes ferrous materials from the crushed pieces of polyurethane (Step S5') may be performed by providing, for example, a drum-type magnetic separator in the middle or at the distal end of the conveying path that conveys the polyurethane crushed pieces, prior to the re-crushing step (Step S5) of performing fine, additional crushing with a crusher of the crushed pieces of polyurethane separated by air separation (Step S4).

Moreover, magnetic separation that separates and removes ferrous materials from the polyurethane powder (Step S6') may be performed by providing, for example, a drum-type magnetic separator in the middle or at the distal end of the conveying path that conveys the polyurethane powder, prior to the compression step (Step S6) that compression molds the re-crushed polyurethane powder using the roller-type pellet mill 4 into fuel pellets.

In this way, extensive magnetic separation is performed in order to avoid the situation of a spark occurring due to friction of ferrous materials when compression molding fuel pellets using the roller-type pellet mill 4, and cyclopentane gas that is produced from the polyurethane powder being ignited by that spark, when a ferrous material comes to be mixed in the polyurethane powder.

Note that it is not necessary to perform the magnetic separation steps (Step S5', Step S6') twice prior to re-crushing and prior to the compression step using the pellet mill, and the ferrous material may be removed in one of the steps.

Also, in the fuel pellet manufacturing method of the reference example, when conveying polyurethane powder to the location where the compression step (Step S6) is performed that compression molds the re-crushed polyurethane powder using the roller-type pellet mill 4 into fuel pellets, this conveying path may have a constitution provided with a spark detector and a sprinkler that sprays water onto the conveying path based on a detection signal from the spark detector (Step S5"), and may have a constitution that inhibits the generation of sparks during conveying of the polyurethane powder. In this way, inhibiting the generation of sparks during the conveying of polyurethane powder is performed in order to avoid the situation of cyclopentane gas that is produced from the polyurethane powder being ignited by a spark produced during the conveying of the powder.

Note that as a means of inhibiting the generation of sparks, in addition to a combination of a spark detector and a sprinkler, a combination of a hygrometer and a sprinkler is also conceivable.

That is, it is possible to prevent the generation of a spark from occurring due to static electricity by ensuring the humidity on the conveying path is always a predetermined value or higher by always detecting the humidity in the conveying path with the hygrometer, and in the event of the humidity dropping below a predetermined value, spraying water from the sprinkler. Also, in order to eliminate static electricity that is produced by a powder fluid during transport, it is important to perform static electrical grounding of the piping, the hopper 21 and the mill, and perform electrostatic removal.

According to this kind of fuel pellet manufacturing apparatus or manufacturing method, since accident prevention measures are adopted, it is possible to avoid burning of the cyclopentane gas or liquid in the apparatus. Also, even if the cyclopentane gas burns, it is possible to reduce the effects to a minimum.

Note that the present invention is not limited to the aforementioned embodiment, and various modifications may be within the scope of the appended claims.

For example, the fuel pellet P of the present embodiment is formed in a cylindrical shape, but it is not limited thereto, and it may be formed in a circular shape, or a conical shape, a pyramidal shape, or elliptical shape.

Also, in the above mentioned embodiments, one roller-type pellet mill 4 was installed, but it is not limited thereto, and a plurality of roller-type pellet mills 4 may be provided in parallel, and one air-cooling type cooling tower 14 may be integrated with them, or one may be provided for each of the plurality of roller-type pellet mills 4.

Also, the roller-type pellet mill may be enlarged within a range of the ratio L/D of the length L and diameter D of the fuel pellet P that is formed being 4 to 15.

### Industrial Applicability

It is possible to utilize the fuel pellet of the present invention as a fuel for an ordinary incinerator or a boiler. Also, since the bulk specific gravity is set to 0.45 to 0.55, it is sufficiently consolidated, and so it is possible to reduce the transportation cost, possible to inhibit the generation of dust, and simultaneously improve handling.

Also, according to the fuel pellet manufacturing method of the present invention, compared to the case of making polyurethane powder into a sponge cake by performing compression molding of polyurethane using a press, it is possible to efficiently compress, and possible to set the bulk specific gravity of the fuel pellet to 0.45 to 0.55. Also, since the degassing efficiency is excellent, the residual chlorine concentration can be set to 0.3 wt. percent or less without using forced heating or a dechlorination agent, not only for cyclopentane-expanded polyurethane but even chlorofluorocarbon-expanded polyurethane.

Also, according to the fuel pellet manufacturing apparatus of the present invention, it is possible to suitably carry out the fuel pellet manufacturing method of the present invention, and possible to manufacture the fuel pellet according to the present invention.

### Description of Reference Numerals

- 1: Conveyor (Polyurethane Supply Unit)
- 2a, 2b: Storage Tanks (Polyurethane Supply Unit)
- 3a, 3b: Screw Feeders (Polyurethane Supply Unit)
- 4a: Polyurethane Introducing Path (Polyurethane Supply Unit)
- 4: Roller-Type Pellet Mill (Palletizing Unit)
- 5: Casing
- 6: Ring-Shaped Die
- 6b: Molding Hole
- 7: Press Roll
- 11: Cyclone
- 12: Bag Filter
- 12b: Blower (Negative Pressure Forming Unit)
- 13: Hermetic Type Chain Conveyor (Conveying Unit, Cooling Unit)
- 14: Air-Cooling Type Cooling Tower (Cooling Unit)
- 15: Exhaust Blower (Negative Pressure Forming Unit)
- 16: Vibrating Feeder
- 18: Apron Conveyor
- 21: Hopper
- 21a: Hopper Side Wall
- 22: Inert Gas Introducing Path (Inert Gas Introducing Unit)
- 23: Pressure Sensor (First Blocking-Inhibiting Unit)
- 24: Knife Gate Value (First Blocking-Inhibiting Unit)
- 25: Explosion Vent (Second Inhibiting Unit)
- A: Polyurethane Powder
- P: Fuel Pellet
- S2: Rough Crushing (Crushing Step)
- S5: Re-Crushing (Crushing Step)
- S6: Compression Step
- S7: Cooling Step

## Claims

1. A manufacturing method for manufacturing a fuel pellet (P), the fuel pellet being formed by compression molding powdered polyurethane (A) obtained by crushing urethane foam, wherein the bulk specific gravity of the fuel pellet is set to 0.45 to 0.55, and the residual chlorine concentration in the fuel pellet is set to 0.3 wt. percent or less, the manufacturing method comprising:
a crushing step (S2, S5) that crushes urethane foam recovered from discarded electrical appliances into powdered polyurethane of 10 mm or less; and
a compression step (S6) that compression molds a fuel pellet by interposing the powdered polyurethane between a ring-shaped die and a press roll that is arranged on the inner side of the die, and pushing it out from molding holes formed in the die, wherein the compression step is performed in a negative pressure atmosphere by a negative pressure forming unit in which the pressure is lower than the atmospheric pressure.

2. The fuel pellet manufacturing method according to claim 1, wherein the compression step is performed in a negative pressure atmosphere in which the pressure is 147 Pa to 245 Pa lower than the atmospheric pressure.

3. The fuel pellet manufacturing method according to claim 1 or claim 2, wherein the temperature of the powdered polyurethane during the compression step is in the range of 140°C to 160°C.

4. The fuel pellet manufacturing method according to one of claim 1 to claim 3, further comprising a cooling step (S7) that, after the compression step, cools the fuel pellets that are in a heated state following the compression molding.

5. A fuel pellet manufacturing apparatus for conducting the manufacturing method as described in claim 1 to claim 4, the fuel pellet manufacturing apparatus comprising:
a crushing machine that crushes urethane foam recovered from discarded electrical appliances into powdered polyurethane (A) of 10 mm or less;
a pelletizing unit (4) that compression molds fuel pellets (P) by interposing powdered polyurethane between a ring-shaped die (6) and a press roll (7) that is arranged on the inner side of the die, and pushing it out from molding holes (6b) formed in the die;
a polyurethane supply unit (1, 2a, 2b, 3a, 3b, 4a) that supplies powdered polyurethane to the pelletizing unit;
a cooling unit (14) that cools the fuel pellets that have been compression molded in the pelletizing unit;
a conveying unit (13) that conveys the fuel pellets that have been compression molded in the pelletizing unit to the cooling unit; and **characterized by**
a negative pressure unit (15) that maintains a space that is formed surrounding the pelletizing unit and the conveying unit at a predetermined negative atmosphere.

6. The fuel pellet manufacturing apparatus according to claim 5, wherein an inert gas introducing unit (22) that introduces inert gas to the pelletizing portion that compression molds the fuel pellets, and a first blocking-inhibiting unit (23, 24) that inhibits the spread of flames generated in the pelletizing portion to an outside of the pelletizing portion and a second inhibiting unit (25) that inhibits the spread of the effects of an explosion that occurs in the pelletizing portion to the outside of the pelletizing portion are attached to the pelletizing unit.

7. A fuel pellet (P) manufactured by conducting the manufacturing method as described in claim 1 to claim 4, **characterized in that** the bulk specific gravity of the fuel pellet is set to 0.45 to 0.55, and the residual chlorine concentration in the fuel pellet is set to 0.3 wt. percent or less.

8. The fuel pellet according to claim 7, wherein the fuel pellet is formed in a cylindrical shape, and the ratio L/D of the length L and the diameter D is 4 to 15.

## Patentansprüche

1. Herstellungsverfahren zur Herstellung eines Brennstoffpellets (P), wobei das Brennstoffpellet durch Formpressen von pulverisiertem Polyurethan (A) ausgebildet wird, das durch Zerkleinern von Urethanschaum erhalten wird, wobei das spezifisches Gewicht des Schüttguts des Brennstoffpellets auf 0,45 bis 0,55 festgelegt ist, und die Restchlorkonzentration in dem Brennstoffpellet auf 0,3 Gew.% oder weniger festgelegt ist, wobei das Herstellungsverfahren umfasst:
einen Zerkleinerungsschritt (S2, S5), der Urethanschaum, der aus ausrangierten Elektroartikeln rückgewonnen ist, in pulverisiertes Polyurethan von 10 mm oder weniger zerkleinert; und
einen Kompressionsschritt (S6), der ein Brennstoffpellet formpresst durch Anordnen des pulversisierten Polyurethans zwischen einem ringförmigen Verformungswerkzeug und einer Presswalze, die an der Innenseite des Verformungswerkzeugs angeordnet ist, und Herausdrücken von ihm aus Formgebungslöchern, die in dem Verformungswerkzeug ausgebildet sind, wobei der Kompressionsschritt in einer Unterdruckatmosphäre durch eine Unterdruckausbildungseinheit, in welcher der Druck niedriger als der Atmosphärendruck ist, durchgeführt wird.

2. Brennstoffpellet-Herstellungsverfahren nach Anspruch 1, wobei der Kompressionsschritt in einer Unterdruckatmosphäre durchgeführt wird, in welcher der Druck 147 Pa bis 245 Pa niedriger als Atmosphärendruck ist.

3. Brennstoffpellet-Herstellungsverfahren nach Anspruch 1 oder Anspruch 2, wobei die Temperatur des pulverisierten Polyurethans während des Kompressionsschritts in dem Bereich von 140°C bis 160°C ist.

4. Brennstoffpellet-Herstellungsverfahren nach einem von Anspruch 1 bis Anspruch 3, ferner einen Kühlschritt (S7) umfassend, der, nach dem Kompressionsschritt, die Brennstoffpellets kühlt, die, dem Formpressen folgend, in einem erwärmten Zustand sind.

5. Brennstoffpellet-Herstellungsvorrichtung zum Durchführen des Herstellungsverfahrens wie in Anspruch 1 bis Anspruch 4 beschrieben, wobei die Brennstoffpellet-Herstellungsvorrichtung aufweist:
eine Zerkleinerungsmaschine, die Urethanschaum, der aus ausrangierten Elektroartikeln rückgewonnen ist, in pulverisiertes Polyurethan (A) von 10 mm oder weniger zerkleinert;
eine Pelletierungseinheit (4), die Brennstoffpellets (P) formpresst durch Anordnen von pulverisiertem Polyurethan zwischen einem ringförmigen Verformungswerkzeug (6) und einer Presswalze (7), die an der Innenseite des Verformungswerkzeugs angeordnet ist, und Herausdrücken von ihm aus Formgebungslöchern (6b), die in dem Verformungswerkzeug ausgebildet sind;
eine Polyurethan-Zuführeinheit (1, 2a, 2b, 3a, 3b, 4a), die pulverisiertes Polyurethan an die Pelletierungseinheit zuführt;
eine Kühleinheit (14), welche die Brennstoffpellets kühlt, die in der Pelletierungseinheit formgepresst wurden;
eine Fördereinheit (13), welche die Brennstoffpellets, die in der Pelletierungseinheit formgepresst wurden, zu der Kühleinheit fördert; und **gekennzeichnet durch**
eine Unterdruckeinheit (15), die einen Raum, der die Pelletierungseinheit umgebend ausgebildet ist, und die Fördereinheit bei einer vorbestimmten Unterdruckatmosphäre beibehält.

6. Brennstoffpellet-Herstellungsvorrichtung nach Anspruch 5, wobei eine Inertgas-Einleitungseinheit (22), die Inertgas zu dem Pelletierungsabschnitt einleitet, der die Brennstoffpellets formpresst, und eine erste Sperr-Hemmeinheit (23, 24), die das Ausbreiten von in dem Pelletierungsabschnitt erzeugten Flammen zu einer Außenseite des Pelletierungsabschnitts hemmt, und eine zweite Hemmeinheit (25), die das Ausbreiten der Wirkungen von einer in dem Pelletierungsabschnitt auftretenden Explosion zu der Außenseite des Pelletierungsabschnitts hemmt, an der Pelletierungseinheit angebracht sind.

7. Brennstoffpellet (P), hergestellt durch Durchführen des Herstellungsverfahrens wie in Anspruch 1 bis Anspruch 4 beschrieben, **dadurch gekennzeichnet, dass** das spezifische Gewicht des Schüttguts des Brennstoffpellets auf 0,45 bis 0,55 festgelegt ist, und die Restchlorkonzentration in dem Brennstoffpellet auf 0,3 Gew.% oder weniger festgelegt ist.

8. Brennstoffpellet nach Anspruch 7, wobei das Brennstoffpellet in einer zylindrischen Form ausgebildet ist, und das Verhältnis L/D der Länge L und des Durchmessers D 4 bis 15 beträgt.

## Revendications

1. Procédé de fabrication permettant de fabriquer une pastille de combustible (P), la pastille de combustible étant formée par moulage par compression de polyuréthane en poudre (A) obtenu en écrasant une mousse d'uréthane, dans lequel la densité apparente de la pastille de combustible est réglée dans une plage allant de 0,45 à 0,55, et la concentration de chlore résiduel dans la pastille de combustible est réglée à 0,3 pour cent en poids ou moins, le procédé de fabrication comprenant :
une étape d'écrasement (S2, S5) qui écrase une mousse d'uréthane récupérée d'appareils électriques mis au rebut de manière à former du polyuréthane en poudre de 10 mm ou moins ; et
une étape de compression (S6) qui moule par compression une pastille de combustible en interposant le polyuréthane en poudre entre une filière en forme d'anneau et un rouleau de pression qui est agencé sur le côté interne de la filière, et en le poussant en dehors de trous de moulage formés dans la filière, dans lequel l'étape de compression est effectuée dans une atmosphère à pression négative par une unité de formation de pression négative dans laquelle la pression est inférieure à la pression atmosphérique.

2. Procédé de fabrication de pastille de combustible selon la revendication 1, dans lequel l'étape de compression est effectuée dans une atmosphère à pression négative dans laquelle la pression est inférieure de 147 Pa à 245 Pa à la pression atmosphérique.

3. Procédé de fabrication de pastille de combustible selon la revendication 1 ou 2, dans lequel la température du polyuréthane en poudre pendant l'étape de compression se trouve dans la plage allant de 140°C à 160°C.

4. Procédé de fabrication de pastille de combustible selon l'une des revendications 1 à 3, comprenant en outre une étape de refroidissement (S7) qui, après l'étape de compression, refroidit les pastilles de combustible qui sont dans un état chauffé qui suit le moulage par compression.

5. Appareil de fabrication de pastille de combustible permettant de réaliser le procédé de fabrication tel que décrit dans les revendications 1 à 4, l'appareil de fabrication de pastille de combustible comprenant :
une machine d'écrasement qui écrase une mousse d'uréthane récupérée d'appareils électriques mis au rebut de manière à former du polyuréthane en poudre (A) de 10 mm ou moins ;
une unité de pastillage (4) qui moule par compression des pastilles de combustible (P) en interposant le polyuréthane en poudre entre une filière en forme d'anneau (6) et un rouleau de pression (7) qui est agencé sur le côté interne de la filière, et en le poussant en dehors de trous de moulage (6b) formés dans la filière ;
une unité d'alimentation en polyuréthane (1, 2a, 2b, 3a, 3b, 4a) qui alimente l'unité de pastillage en polyuréthane en poudre ;
une unité de refroidissement (14) qui refroidit les pastilles de combustible qui ont été moulées par compression dans l'unité de pastillage ;
une unité de transport (13) qui transporte les pastilles de combustible qui ont été moulées par compression dans l'unité de pastillage vers l'unité de refroidissement ; et **caractérisé par**
une unité à pression négative (15) qui maintient un espace qui est formé autour de l'unité de pastillage et de l'unité de transport à une atmosphère négative prédéterminée.

6. Appareil de fabrication de pastille de combustible selon la revendication 5, dans lequel une unité d'introduction de gaz inerte (22) qui introduit un gaz inerte à la partie de pastillage qui moule par compression les pastilles de combustible, et une première unité de blocage-inhibition (23, 24) qui inhibe la propagation de flammes générées dans la partie de pastillage à l'extérieur de la partie de pastillage et une deuxième unité d'inhibition (25) qui inhibe la propagation des effets d'une explosion qui se produit dans la partie de pastillage à l'extérieur de la partie de pastillage sont fixées à l'unité de pastillage.

7. Pastille de combustible (P) fabriquée en réalisant le procédé de fabrication tel que décrit dans les revendications 1 à 4, **caractérisé en ce que** la densité apparente de la pastille de combustible est réglée dans une plage allant de 0,45 à 0,55, et la concentration de chlore résiduel dans la pastille de combustible est réglée à 0,3 pour cent en poids ou moins.

8. Pastille de combustible selon la revendication 7, dans laquelle la pastille de combustible est présente sous forme cylindrique, et le rapport L/D de la longueur L et du diamètre D est de 4 à 15.
